# EUROPÄISCHE PATENTANMELDUNG

(11) **EP 3 974 157 A2**
(43) Veröffentlichungstag der Anmeldung: **30.03.2022**
(21) Anmeldenummer: 21197327.6
(22) Anmeldetag: 17.09.2021
(51) Int. Cl.: B29C 63/28, B29C 63/34, B29C 53/02

(54) **VORRICHTUNG ZUM RADIALEN AUFWEITEN DER ENDABSCHNITTE EINES AUSKLEIDUNGSSCHLAUCHS ZUM AUSKLEIDEN VON DEFEKTEN ROHRLEITUNGEN SOWIE AUSKLEIDUNGSSCHLAUCH UND VERFAHREN ZUM EINBRINGEN EINES SOLCHEN IN EINE DEFEKTE ROHRLEITUNG**

(30) Priorität: 29.09.2020 DE 102020125355
(71) Anmelder: Brandenburger Liner GmbH & Co. KG, 76829 Landau (DE)
(72) Erfinder: Blenke, Stefan, 76829 Landau (DE)
(74) Vertreter: Kesselhut, Wolf

(57) **Zusammenfassung**

Die Erfindung betrifft eine Vorrichtung (1) zum radialen Aufweiten der Endabschnitte (2a, 2b) eines mit einem härtbaren Reaktionsharz getränkten Auskleidungsschlauchs (2) aus Fasermaterial zum Auskleiden von defekten Rohrleitungen (4), die einen expandierbaren geschlossenen Expansionskörper (10) aus einem flexiblen luftunduchlässigen Werkstoff, welcher dazu eingerichtet ist, in einen Endabschnitt (2a, 2b) des Auskleidungsschlauchs (2) eingebracht zu werden, sowie eine mit dem Innenraum (12) des Expansionskörpers (10) strömungsmäßig verbundene Zuleitung (14) aufweist, welche zur Beaufschlagung des Innenraums (12) des Expansionskörpers (10) mit einem Druckgas (16a) mit einer Druckgasquelle (16) verbindbar ist. Die Erfindung betrifft weiterhin einen Auskleidungsschlauch (2), in dessen Endabschnitte (2a, 2b) jeweils eine solche Vorrichtung (1) eingelegt ist sowie ein Verfahren zum Einbringen eines solchen Auskleidungsschlauchs (2) in eine zu sanierende Rohrleitung (4).

## Beschreibung

Die Erfindung betrifft eine Vorrichtung zum radialen Aufweiten der Endabschnitte eines Auskleidungsschlauchs zum Auskleiden von defekten Rohrleitungen sowie einen Auskleidungsschlauch und ein Verfahren zum Einbringen eines solchen in eine defekte Rohrleitung gemäß dem Oberbegriff von Anspruch 1, 8 und 10.

Auf dem Gebiet der grabenlosen Sanierung von defekten Abwasserkanälen werden Auskleidungsschläuche eingesetzt, die als "Inliner" bezeichnet werden und aus einem Innenfolienschlauch und einem auf diesem angeordneten Fasermaterial, insbesondere aus Glasfasergewebe bestehen, welches mit einem flüssigen Reaktionsharz getränkt ist. Um die Auskleidungsschläuche in einer zu sanierenden Rohrleitung, wie z.B. einem Abwasserkanal, zu installieren, werden diese nach dem Einziehen des Auskleidungsschlauchs in die Rohrleitung an den Enden durch sogenannte Packer verschlossen, bei denen es sich um Metallzylinder handelt, die im Bereich der Endabschnitte eines Auskleidungsschlauchs in diesen eingeführt und im Anschluss daran z.B. durch Spanngurte, die im Bereich der Packer um die Außenseite des Schlauchs geführt sind, verschlossen werden. Im Anschluss daran wird der Innenraum des Auskleidungsschlauchs durch die Packer hindurch mit Druckluft beaufschlagt, so dass der Auskleidungsschlauch sich aufweitet und an die Innenseite der defekten Rohrleitung anlegt.

Schließlich wird bei UV-härtenden Auskleidungsschläuchen durch den Innenraum des aufgestellten Auskleidungsschlauchs eine UV-Lichtquelle hindurch gezogen, um die im Reaktionsharz enthaltenden UV-Initiatoren zu aktivieren und das Harz auszuhärten. Ein solcher Auskleidungsschlauch sowie ein Verfahren zur Herstellung eines solchen sind beispielsweise aus der WO-A 00/73692 bekannt.

Beim Einbau der zuvor beschriebenen Auskleidungsschläuche ergibt sich das Problem, dass bei großen Innendurchmessern DN von z.B. mehr als 800 mm für das Einsetzen der mitunter bis zu 100 kg schweren Packer in die beiden Endabschnitte aufgrund des hohen Eigengewichts des Fasermaterials/Laminats von bis zu 200 kg/m, aus welchem die tragende Struktur der Auskleidungsschläuche besteht, eine große körperliche Anstrengung der Monteure erforderlich ist.

Zudem sind in den engen Kanalschächten, in die die Packer üblicher Weise mit einem Kran herabgelassen werden, die Platzverhältnisse sehr beengt, was das Anheben der oben liegenden Lage des Auskleidungsschlauchs neben dem hohen Gewicht des Fasermaterials/ Laminats zusätzlich erschwert. Ein solches Anheben ist erforderlich, um den Packer in den Innenbereich des Auskleidungsschlauchs einsetzen zu können. Hinzu kommt, dass der obenliegende Teil des Auskleidungsschlauchs in den Endabschnitten beim Einsatz eines Packers mit einer üblichen Länge von ca. 80 cm vom Rand aus betrachtet über einen Abstand von ca. 1,5 m hinweg angehoben werden muss, um den Packer überhaupt im Innenbereich der Endabschnitte des Auskleidungsschlauchs platzieren zu können.

Eine weitere Schwierigkeit beim Einsetzen der Packer in den Innenraum der beiden gegenüberliegenden Endabschnitte eines zuvor beschriebenen Auskleidungsschlauchs besteht darin, dass der empfindliche Innenfolienschlauch im Inneren der Auskleidungsschläuche, welcher zum Expandieren des Auskleidungsschlauchs zwingend erforderlich ist, trotz der aufzubringenden großen Kräfte beim Bewegen der Packer nicht beschädigt werden darf, da andernfalls die Luft aus dem Innenraum durch das Fasermaterial hindurch austritt und das Reaktionsharz ausbläst. Dies führt dazu, dass der Auskleidungsschlauch an der betreffenden Stelle nach dem Aushärten des Reaktionsharzes mechanisch geschwächt ist oder im Extremfalle gar nicht erst expandiert werden kann, bzw. während der Aushärtung in sich zusammenfällt.

Demgemäß ist es eine Aufgabe der vorliegenden Erfindung, eine Vorrichtung zu schaffen, mit der sich expandierbare, aus mit einem härtbaren Reaktionsharz getränktem Fasermaterial gefertigte Auskleidungsschläuche einfacher installieren lassen.

Diese Aufgabe wird erfindungsgemäß durch eine Vorrichtung mit den Merkmalen von Anspruch 1 gelöst.

Eine weitere Aufgabe der Erfindung besteht darin, einen Auskleidungsschlauch zu schaffen, welcher sich nach dem Einziehen in eine zu sanierende Rohrleitung mit geringerem Aufwand expandieren lässt.

Diese Aufgabe wird erfindungsgemäß durch einen Auskleidungsschlauch mit den Merkmalen von Anspruch 8 gelöst.

Eine weitere Aufgabe der Erfindung besteht darin, ein Verfahren zu schaffen, mit welchem sich ein zuvor beschriebener Auskleidungsschlauch mit geringerem Aufwand in einer zu sanierenden Rohrleitung installieren lässt.

Diese Aufgabe wird erfindungsgemäß durch ein Verfahren mit den Merkmalen von Anspruch 10 gelöst

Weitere Merkmale der Erfindung sind in den Unteransprüchen beschrieben.

Gemäß der Erfindung umfasst eine Vorrichtung zum radialen Aufweiten der Endabschnitte eines mit einem härtbaren Reaktionsharz getränkten Auskleidungsschlauchs aus Fasermaterial, insbesondere aus einem mehrlagigen Glasfaserlaminat aus einem oder mehreren überlappend angeordneten Glasfaserbändern, zum Auskleiden von defekten Rohrleitungen, einen expandierbaren geschlossenen Expansionskörper aus einem flexiblen luftunduchlässigen Werkstoff, welcher dazu eingerichtet ist, in einen Endabschnitt des Auskleidungsschlauchs eingebracht zu werden, Die erfindungsgemäße Vorrichtung umfasst weiterhin eine mit dem Innenraum des Expansionskörpers strömungsmäßig verbundene Zuleitung, über welche der Innenraum des Expansionskörpers mit dem Druckgas einer Druckgasquelle, insbesondere Druckluft, beaufschlagt werden kann, um den Expansionskörper im Auskleidungsschlauch zu expandieren und dadurch den oberen Rand des betreffenden Endabschnitts anzuheben. Dies ermöglicht es, den Endabschnitt des Auskleidungsschlauchs zu öffnen und einen in Fachkreisen als Packer bezeichneten Verschlusskörper in den Innenraum des Auskleidungsschlauchs einzubringen, mittels welchem der Endbereich verschlossen und der Auskleidungsschlauch in der zu sanierenden Rohrleitung insgesamt in Abhängigkeit vom eingesetzten Reaktionsharz mittels Druckluft, Heißdampf oder Heißwasser expandiert werden kann.

Bei der bevorzugten Ausführungsform der Erfindung besitzt der Expansionskörper im expandierten Zustand eine zylindrische Form oder eine zigarrenartige Form. Hierdurch ergibt sich gegenüber einer Kugelform des blasenartigen Expansionskörpers, die ebenfalls denkbar ist, der Vorteil, dass sich der Expansionskörper sehr kostengünstig durch Zuschweißen der Enden eines Innenfolienschlauchs aus thermisch verschweißbarem Folienmaterial fertigen lässt, welches ohnehin zur Herstellung der Auskleidungsschläuche als Meterware benötigt wird. Zudem lässt sich ein im Wesentlichen zylindrischer oder zigarrenfönniger Expansionskörper in vorteilhafter Weise nahezu ohne Falten flach auslegen, wodurch sich die Möglichkeit eröffnet, jeweils einen Expansionskörper nach der Fertigung des Auskleidungsschlauchs in dessen Endabschnitte einzulegen, bevor der Auskleidungsschlauch zusammengefaltet und in ein entsprechendes Transportbehältnis eingelegt wird, in welchem anschließend der Transport zur Baustelle erfolgt. Aufgrund der nicht vorhandenen Falten des nicht expandierten, d.h. entspannten Expansionskörpers, entfällt dabei die Gefahr, dass sich Verwerfungen und Falten des Folienmaterials des Expansionskörpers in das empfindliche Laminat des Auskleidungsschlauchs eindrücken und dort das flüssige Reaktionsharz während des Transports zur Baustelle lokal aus dem Laminat herauspressen, so dass es nach dem Aushärten des Harzes zu mechanischen Schwachstellen im Wandaufbau des ausgehärteten Auskleidungsschlauchs kommen kann.

Bei der bevorzugten Ausführungsform der Erfindung besitzt der Expansionskörper eine Länge, die dem 1,5 bis 2-fachen des Durchmessers des Auskleidungsschlauchs entspricht. Wie von der Anmelderin gefunden wurde, stellt dieser Durchmesser einen guten Kompromiss zwischen einer einfachen Handhabbarkeit des flexiblen Expansionskörpers und einem zuverlässigen Anheben des oberen Umfangsabschnitts des Auskleidungsschlauchs im Bereich des jeweiligen Endabschnitts dar.

Wie bereits zuvor ausgeführt wurde, ist der Expansionskörper aus einer Kunststofffolie geformt, die vorteilhafter Weise eine thermisch verschweißbare Kunststofffolie, insbesondere eine PE/PA Folie, ist. Hierdurch ergibt sich der Vorteil, dass der Expansionskörper sehr kostengünstig durch Verschweißen der Enden eines zur Herstellung des Auskleidungsschlauchs eingesetzten Innenfolienschlauch gefertigt werden kann, wobei zuvor lediglich noch eine vorzugsweise flexible Zuleitung bevorzugt mit einem Anschlussadapter zum Einbringen des Druckgases, durch eine in das Folienmaterial eingebrachte Öffnung eingesetzt und druckdicht mit dem Folienmaterial verschweißt oder verklebt wird. Die Zuleitung kann hierzu ebenfalls aus einem thermisch verschweißbaren flexiblen Kunststoffmaterial, z.B. PE, bestehen.

Hierbei weist die Zuleitung, die bevorzugt ein flexibler Schlauch aus thermisch verschweißbarem Kunststoff ist, in vorteilhafter Weise eine Länge auf, die größer als der lichte Abstand ist, in welchem der Expansionskörper entfernt vom Rand der benachbarten Öffnung des betreffenden Endabschnitts in den Auskleidungsschlauch eingelegt ist, um ausreichend Platz zum Einsetzen des Packers bereit zu stellen. Das freie Ende des Schlauchs, der z.B. eine Länge von 1 m besitzen kann, kann z.B. mit einem Anschlussadapter versehen sein, über den ein bekannter komplementärer Anschlussadapter der Druckluftzuleitung eines üblichen Kompressors an diesen angeschlossen werden kann.

Alternativ zum Einschweißen oder Einkleben der Zuleitung kann am Expansionskörper auch ein Befüllanschluss montiert sein, welcher z.B. ein Metall- oder Kunststoffröhrchen mit einem Außengewindeabschnitt umfassen kann, wie es als Ventilaufnahme von Fahrzeugreifen her bekannt ist. Das Metallröhrchen kann z.B. von innen her durch eine entsprechende Öffnung im Folienmaterial der stirnseitigen Seitenwand des Expansionskörpers hindurchgeführt und auf der Innen- und Außenseite der Wand durch entsprechende flanschartige Anlageabschnitte und eine auf den Gewindeabschnitt aufgeschraubte Mutter druckdicht fixiert werden.

Bei der bevorzugten Ausführungsform der Erfindung besitzt die Kunststofffolie eine Stärke zwischen 80 und 250 Mikrometern, insbesondere zwischen 120 und 200 Mikrometern. Hierdurch ergibt sich der Vorteil, dass die Folie eine hinreichende Druckfestigkeit besitzt, so dass der Expansionskörper beim Aufblasen mit einem Luftdruck von z.B. 0,1 bar oder weniger nicht platzt; andererseits das Folienmaterial jedoch nicht zu sehr aufträgt, sodass beim Zusammenlegen des Auskleidungsschlauchs für den Transport Verwerfungen entstehen, die zu einem lokalen Herausdrücken des Reaktionsharzes aus dem Fasermaterial und den damit einhergehenden Nachteilen führen können, wie dies zuvor beschrieben wurde.

Nach einem weiteren der Erfindung zugrunde liegenden Gedanken kann es vorgesehen sein, dass der Expansionskörper im entspannten, d.h. im nicht expandierten Zustand, zu einem Wickel aufrollbar und durch Beaufschlagung mit Druckgas aus der Druckgasquelle abwickelbar ist. Wie die Anmelderin in diesem Zusammenhang gefunden hat, kann der entspannte Expansionskörper dadurch als flacher Wickel in den Öffnungsbereich im zugehörigen Endabschnitt eines Auskleidungsschlauchs eingelegt werden, von wo aus er sich dann durch eine Beaufschlagung mit Druckluft selbständig in den Auskleidungsschlauch hinein abrollt und in der vollständig abgerollten Stellung expandiert, ohne dass vom Bedienpersonal zusätzliche Handlungen vorgenommen werden müssen, um den Expansionskörper in einem lichten Abstand von ca. 0,4 m bis 1,2 m entfernt vom Rand der Öffnung im Inneren des Auskleidungsschlauchs zu positionieren.

Die Erfindung betrifft weiterhin einen zuvor beschriebenen Auskleidungsschlauch zur Auskleidung einer defekten Rohrleitung, welcher wenigstens einen umfänglich geschlossenen Innenfolienschlauch und eine diesen umgebende Lage aus Fasermaterial, insbesondere wenigstens einem schraubenförmig gewickelten, oder überlappend gelegten Glasfaserband, umfasst, die mit einem härtbaren Reaktionsharz getränkt ist. Der Auskleidungsschlauch besitzt weiterhin einen ersten und zweiten auf einander gegenüberliegenden Seiten des Schlauchs angeordneten Endabschnitt und ist dazu eingerichtet, im zusammengelegten Zustand in eine zu sanierende Rohrleitung eingezogen und durch Einleiten von Druckgas, insbesondere Druckluft in den Innenraum des Auskleidungsschlauchs in der Rohrleitung in bekannter Weise expandiert zu werden.

Der Auskleidungsschlauch zeichnet sich dadurch aus, dass in den ersten und zweiten Endabschnitt jeweils eine Vorrichtung nach einem der vorhergehenden Ansprüche eingelegt ist, welche einen durch Druckgas expandierbaren Expansionskörper umfasst. Dieser ist über einen aus dem Innenraum durch die Öffnung des zugehörigen Endabschnitts des Auskleidungsschlauchs herausgeführten flexiblen Schlauch mit einem Druckgas befüllbar, welches von einer Druckgasquelle, insbesondere einem Kompressor, bereitgestellt und bevorzugt über einen zuvor beschriebenen Anschlussadapter in den Expansionskörper eingeleitet wird.

Bei der bevorzugten Ausführungsform des erfindungsgemäßen Auskleidungsschlauchs ist der Expansionskörper in einem lichten Abstand von 40 bis 80 cm, bevorzugt einem lichten Abstand von 50 cm entfernt vom äußeren Ende eines jeden der beiden Endabschnitte des Auskleidungsschlauchs in dessen Innenraum eingelegt und besitzt bevorzugt eine Länge, die dem 1,5 bis 1,8 - fachen Durchmesser des Auskleidungsschlauchs im expandierten Zustand entspricht. Bei einem Auskleidungsschlauch mit einem Durchmesser DN von 1000 mm besitzt der in diesem Falle zigarrenförmige Expansionskörper eine Länge von 1,5 m bis 1,8 m. Der Durchmesser des Expansionskörpers entsprich hingegen mindestens dem Durchmesser des im Auskleidungsschlauch verbauten Innenfolienschlauchs; kann jedoch auch einen gegenüber diesem um 20 bis 50% vergrößerten Durchmesser aufweisen, um sicher zu stellen, dass der Expansionskörper nicht platzt, wenn sich dieser nicht ungehindert ausbreiten kann. In besonders vorteilhafter Weise wird zur Fertigung des Expansionskörpers ein Innenfolienschlauch mit einem Durchmesser verwendet, welcher einen gegenüber dem Durchmesser des einzuziehenden Auskleidungsschlauchs um 20% bis 50% größeren Durchmesser besitzt.

Die Erfindung umfasst weiterhin ein Verfahren zum Einbringen eines zuvor beschriebenen Auskleidungsschlauchs in eine zu sanierende Rohrleitung, welches die folgenden Verfahrensschritte umfasst:
- Einziehen des Auskleidungsschlauchs im nicht expandierten Zustand in die zu sanierende Rohrleitung, wobei im ersten und zweiten Endabschnitt des Auskleidungsschlauchs eine zuvor beschriebene Vorrichtung mit einem entspannten Expansionskörper in einem lichten Abstand A vom jeweiligen Rand des Endabschnitts angeordnet ist,
- Beaufschlagen des Expansionskörpers im ersten und zweiten Endabschnitt mit Druckgas, um den Auskleidungsschlauch im Bereich des ersten und zweiten Endabschnitts radial aufzuweiten und den Innenraum von außen her zugänglich zu machen,
- Einsetzen eines Packers in den radial aufgeweiteten Innenraum des ersten und zweiten Endabschnitts,
- Fixieren des ersten und zweiten Endabschnitts mittels eines um diesen im Bereich des Packers herum geführten Spannelements, insbesondere eines Spanngurts,
- Entspannen und Entfernen des Expansionskörpers
- Einleiten von Druckgas in den Innenraum des durch die Packer im Bereich des ersten und zweiten Endabschnitts verschlossenen Auskleidungsschlauchs zum Expandieren des Auskleidungsschlauchs, und
- Einführen einer Strahlungsquelle oder Einleiten von Heißwasser oder Heißgas zum Aushärten des Reaktionsharzes in den Innenraum des expandierten Auskleidungsschlauchs.

Die Erfindung wird nachfolgend mit Bezug auf die Zeichnungen anhand einer bevorzugten Ausführungsform beschrieben. In den Zeichnungen zeigen:
- Fig. 1: eine schematische Seitenansicht einer erfindungsgemäßen Vorrichtung mit einem expandierten Expansionskörper, der über eine Druckluftzuleitung an eine Druckluftquelle angeschlossen ist,
- Fig. 2: eine schematische Schnittdarstellung einer zu sanierenden Rohrleitung mit einem im diese eingezogenen nicht expandierten Auskleidungsschlauch, in dessen beide Endabschnitte eine erfindungsgemäße Vorrichtung eingelegt ist, deren Expansionskörper noch nicht expandiert wurde,
- Fig. 3: den Auskleidungsschlauch von Fig. 2 nach dem teilweisen Expandieren des Expansionskörpers im ersten linken Endabschnitt,
- Fig. 4: den Auskleidungsschlauch von Fig. 2 nach dem vollständigen Expandieren des Expansionskörpers und Montieren des Packers am ersten Endabschnitt des Auskleidungsschlauchs,
- Fig. 5: den Auskleidungsschlauch von Fig. 4 nach dem Expandieren des zweiten Expansionskörpers und Montieren des zweiten Packers am zweiten Endabschnitt des Auskleidungsschlauchs, und
- Fig. 6: den Auskleidungsschlauch von Fig. 5 nach dem Entfernen der beiden Expansionskörper, Verschließen der Packer und Expandieren des Auskleidungsschlauchs mittels Druckluft während des Durchziehens einer UV-Strahlungsquelle zum Aushärten des UV-härtbaren Reaktionsharzes.

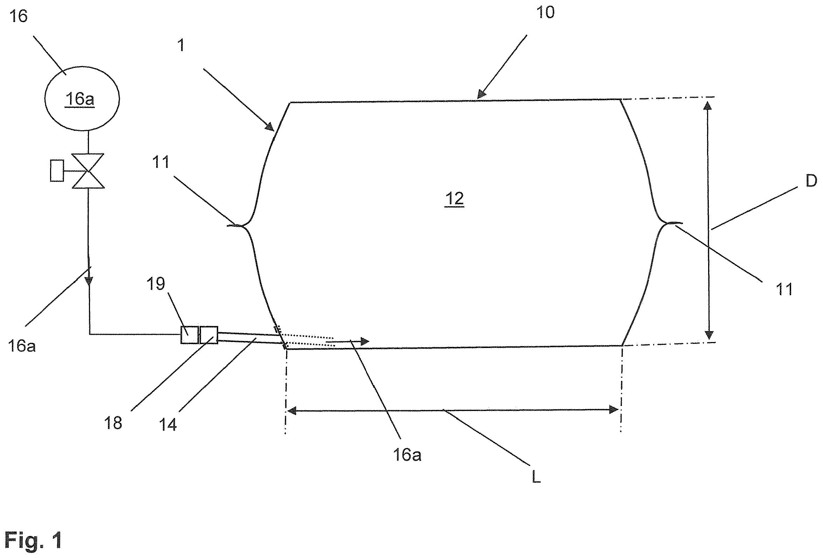

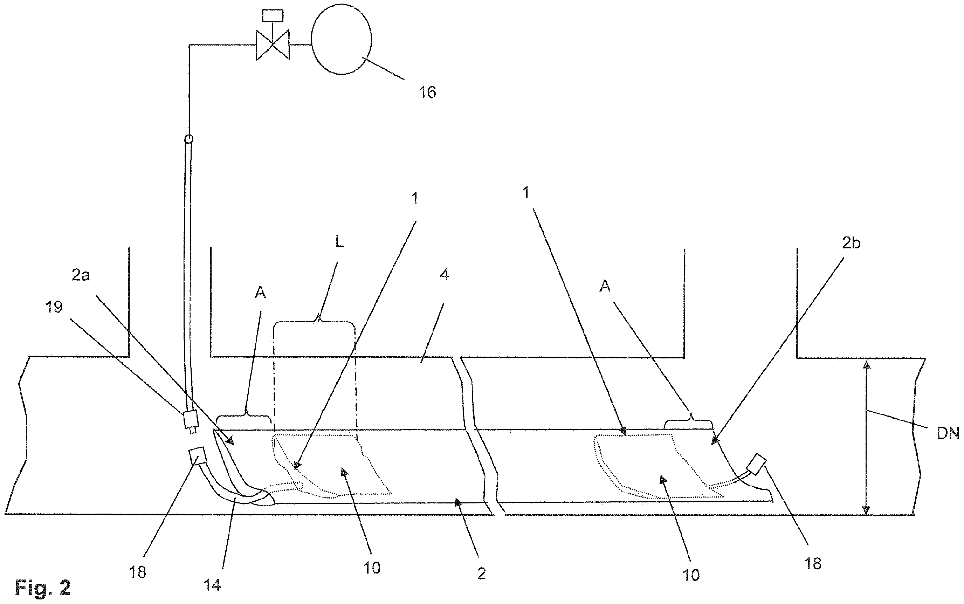

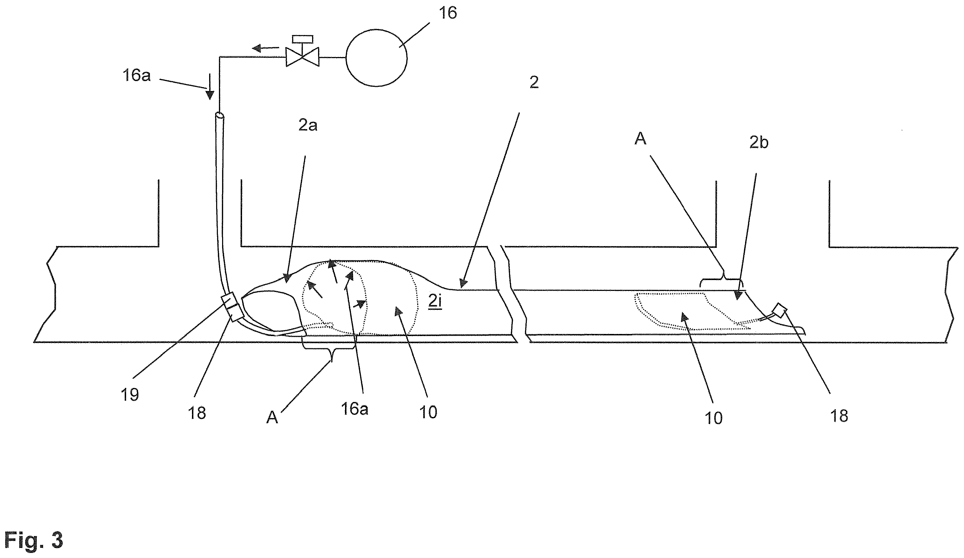

Wie in Fig. 1 gezeigt ist, umfasst eine erfindungsgemäße Vorrichtung 1 zum radialen Aufweiten der Endabschnitte 2a, 2b eines in den Figuren 2 bis 6 gezeigten Auskleidungsschlauchs 2 zum Auskleiden einer defekten Rohrleitung 4 einen expandierbaren Expansionskörper 10 aus einem flexiblen Folienmaterial. Der nach Art einer aufblasbaren zigarrenförmigen Blase ausgestaltete Expansionskörper 10 ist dazu eingerichtet, in einen Endabschnitt 2a, 2b des Auskleidungsschlauchs 2 eingebracht zu werden. Der Auskleidungsschlauch 2 ist ein an sich bekannter Auskleidungsschlauch zur grabenlosen Sanierung von defekten Rohrleitungen, der aus einem Fasermaterial, insbesondere aus schraubenförmig gewickelten oder überlappend gelegten Glasfaserbändern besteht, welches mit einem flüssigen, bevorzugt UV-härtbaren Reaktionsharz getränkt und auf einem nicht näher gezeigten Innenfolienschlauch angeordnet ist.

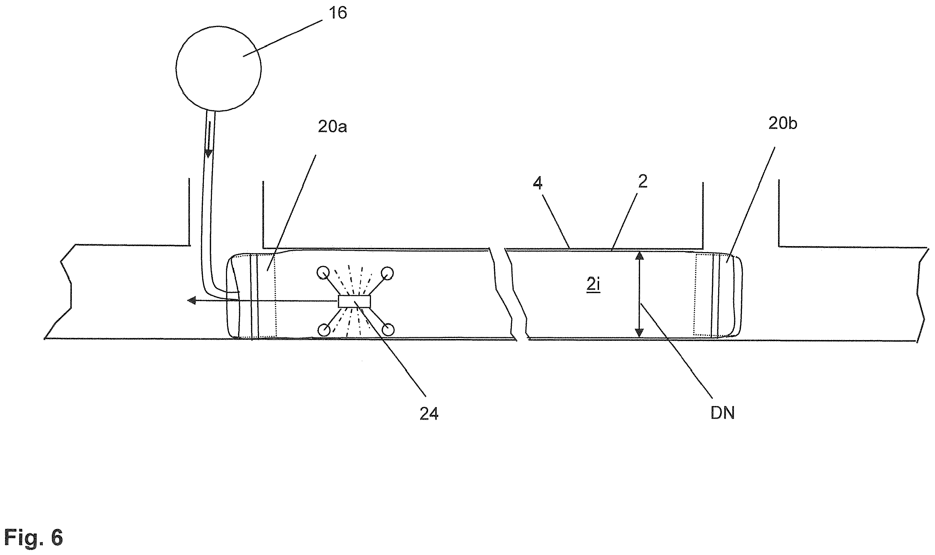

Die erfindungsgemäße Vorrichtung 1 umfasst weiterhin eine mit dem Innenraum 12 des Expansionskörpers 10 strömungsmäßig verbundene Zuleitung 14, welche als flexibler Kunststoffschlauch ausgeführt ist, der ein Länge von vorzugsweise mehr als 50 cm besitzt und an einem Seitenabschnitt des Expansionskörpers 10 angeordnet ist, so dass dieser nach dem Einführen des Expansionskörpers 10 seitlich aus dem zugehörigen Endabschnitt 2a, 2b des Auskleidungsschlauchs 2 herausgeführt werden kann. Wie in Fig. 1 und 2 angedeutet ist, ist die Zuleitung 14 insbesondere über einen bevorzugt selbstschließenden Anschlussadapter 18 und eine weitere Zuleitung mit einem komplementären Anschlussadapter 19 mit einer Druckgasquelle 16 verbindbar, um den Innenraum 12 des Expansionskörpers 10 mit einem Druckgas 16a, insbesondere Druckluft, zu beaufschlagen. Bei der Druckgasquelle 16 handelt es sich vorzugsweise um dieselbe Druckluftquelle 16, mittels welcher der Auskleidungsschlauch 2 selbst expandiert wird, wie dies in Fig. 6 angedeutet ist.

Gemäß der Darstellung von Fig. 1 besitzt der Expansionskörper 10 im expandierten Zustand bei der bevorzugten Ausführungsform der Erfindung eine zylindrische oder zigarrenförmige Form mit einer Länge L, die dem 1,5 bis 2-fachen des Durchmessers D des Expansionskörpers 10 entspricht. Die Länge L kann bei einem Expansionskörper mit einem Durchmesser D von 1000 mm beispielsweise zwischen 1,5 und 2 m liegen, jedoch auch größer oder kleiner gewählt werden, je nach Wandstärke des Auskleidungsschlauchs 2, bzw. dem spezifischen Gewicht des Fasermaterials und dem Befülldruck des Druckgases 16a, welcher vorzugsweise weniger als 0,1 bar beträgt.

Wie zuvor ausgeführt wurde, ist der Expansionskörper 10 aus einer Kunststofffolie geformt, die bevorzugt eine thermisch verschweißbare Kunststofffolie, insbesondere eine PE/PA Folie, ist, welche eine Stärke zwischen 80 und 250 Mikrometern, insbesondere zwischen 120 und 200 Mikrometern besitzen kann. Als Kunststofffolie wird hierzu bevorzugt ein umfänglich geschlossener Folienschlauch verwendet, welcher bei derartigen Auskleidungsschläuchen bekanntermaßen als Innenfolienschlauch eingesetzt wird, der an den Stirnflächen des zylinderförmigen Expansionskörpers durch thermisches Verschweißen des Folienmaterials entlang zweier Schweißnähte 11 verschlossen wird, wie dies in Fig. 1 angedeutet ist.

Bei einer in den Zeichnungen nicht näher gezeigten Ausführungsform der Erfindung ist der längliche Expansionskörper 10 im nicht expandierten Zustand zu einem Wickel aufgerollt, der nach der Fertigung des Auskleidungsschlauchs 2 werksseitig in den jeweiligen Endabschnitt desselben im lichten Abstand A zur Randöffnung des Endabschnitts eingelegt wird. Nach dem Einziehen des zusammengelegten und nicht expandierten Auskleidungsschlauchs 2 mit den darin angeordneten beiden Wickeln in die zu sanierende Rohrleitung auf der Baustelle wird der jeweilige Wickel in den Auskleidungsschlauch hinein abwickelt und der obere Teil des jeweiligen Endabschnitts angehoben, indem der Innenraum 12 des jeweiligen Expansionskörpers 10 mit Druckgas 16a aus der Druckgasquelle 16 befüllt wird.

Bei der bevorzugten Ausführungsform der Erfindung wird der langgestreckte Expansionskörper 10, wie in Fig. 2 gezeigt, bevorzugt werksseitig flach in den jeweiligen Endabschnitt 2a, 2b des Auskleidungsschlauchs 2 eingelegt und verbleibt in diesem, wenn der Auskleidungsschlauch 2 in die zu sanierende Rohrleitung 4 eingezogen wird. Hierbei befindet sich der Expansionskörper 10 in einem lichten Abstand A von 40 bis 80 cm, bevorzugt einem lichten Abstand A von 50 cm entfernt vom äußeren Ende eines jeden der beiden Endabschnitte 2a 2b des Auskleidungsschlauchs 2.

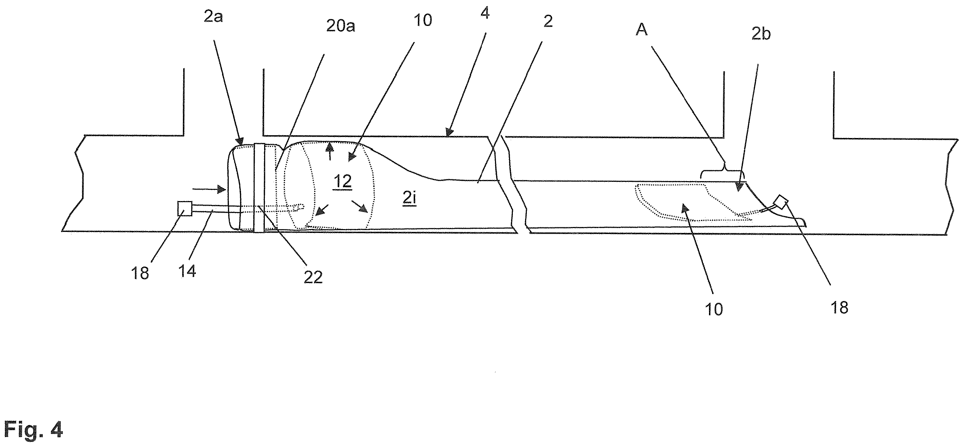

In einem nächsten Schritt wird der jeweilige Expansionskörper 10 im ersten und zweiten Endabschnitt 2a, 2b bei der zuletzt beschriebenen Ausführungsform über die Zuleitung 14 an die Druckgasquelle 16 angeschlossen und der Innenraum 12 des Expansionskörpers 10 mit Druckgas 16a befüllt, wodurch der obere Umfangsabschnitt des Auskleidungsschlauchs 2 im jeweiligen Endabschnitt 2a, 2b angehoben und der Auskleidungsschlauch 2 im Bereich des jeweiligen Endabschnitts 2a, 2b radial aufgeweitet wird. Nach dem Aufweiten des jeweiligen Endabschnitts 2a,2b wird in den radial aufgeweiteten Innenraum 2i des Auskleidungsschlauchs ein bekannter Packer 20a eingesetzt, wie dies in Fig. 4 schematisch für den linken Endabschnitt 2a angedeutet ist, und der Auskleidungsschlauch 2 mittels eines um diesen im Bereich des Packers 20a herum geführten Spanngurts 22 in bekannter Weise druckdicht am Packer 20a fixiert. Die Druckgas-Zuleitung 14 wird dabei bevorzugt durch eine nicht näher gezeigte Zugangsöffnung in der Stirnfläche des Packers 20a hindurchgeführt, bevor dieser in den Innenraum 2i des Auskleidungsschlauchs 2 eingeschoben wird. Alternativ kann die Zuleitung 14 mit einem Ventil versehen sein, welches z.B. im Adapter 18 angeordnet sein kann und nach dem Befüllen des jeweiligen Expansionskörpers 10a, 10b verschlossen wird bevor der Packer 20a, 20b in den geöffneten Endabschnitt 2a, 2b des Auskleidungsschlauchs 2 eingesetzt wird.

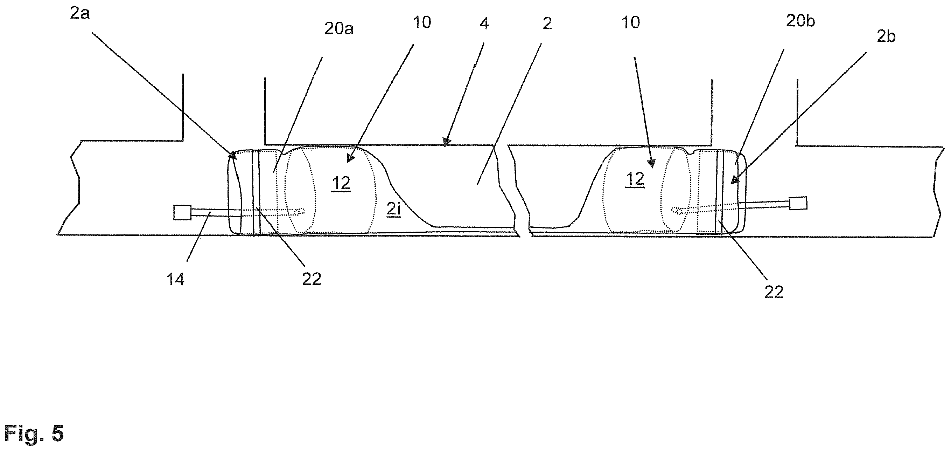

In gleicher Weise erfolgt das Expandieren und Aufweiten sowie das anschließende Einsetzen des zweiten Packers 20b am zweiten gegenüberliegenden Ende 2b des Auskleidungschlauchs 2, so dass der Auskleidungsschlauch 2 schließlich in der in Fig. 5 gezeigten Weise im Bereich seiner beiden Endabschnitte 2a, 2b jeweils durch einen Packer 20a, 20b verschlossen ist. Wie dargestellt befinden sich die beiden Expansionskörper 10 nach dem Einsetzen der Packer 20a, 20b noch im Innenraum 2i der Auskleidungsschlauchs, aus welchem sie durch die verschließbare Zugangsöffnung in der Stirnfläche des topfförmigen Packers 20a, 20b entnommen werden, nachdem die Zuleitung 14, z.B. am Anschlussadapter 18 geöffnet wurde und die Druckluft 16a aus dem Innenraum 12 des Expansionskörpers 10 entwichen ist.

Schließlich wird durch die geöffneten Zugangsöffnungen in den Packern 20a, 20b in bekannter Weise eine Strahlungsquelle 24 in den Innenraum 2i des Auskleidungsschlauchs 2 eingeführt, die jeweilige Zugangsöffnung anschließend durch einen nicht näher gezeigten Deckel verschlossen, der Innenraum 2i mit Druckgas 16a beaufschlagt, um den Auskleidungsschlauch 2 zu expandieren und an die Innenseite der defekten Rohrleitung 4 anzulegen, und letztlich die Strahlungsquelle 24 über eine nicht näher gezeigte Zugeinrichtung durch den Innenraum 2i des Auskleidungsschlauchs 2 gezogen, um das flüssige Reaktionsharz auszuhärten, wie dies in Fig. 6 angedeutet ist.

Alternativ besteht die Möglichkeit, ein thermisch härtbares Reaktionsharz einzusetzen und den Innenraum 2i des Auskleidungsschlauchs 2 mit Heißwasser oder Heißdampf auszuhärten, welches durch wenigstens einen der Packer 20a, 20b zugeführt wird.

### Liste der Bezugszeichen

- 1: erfindungsgemäße Vorrichtung
- 2: Auskleidungsschlauch
- 2a: erster Endabschnitt
- 2b: zweiter Endabschnitt
- 2i: Innenraum des Auskleidungsschlauchs
- 4: zu sanierende Rohrleitung/Kanal
- 10: Expansionskörper
- 11: Schweißnaht
- 12: Innenraum des Expansionskörpers
- 14: Zuleitung
- 16: Druckgasquelle/Kompressor
- 16a: Druckgas
- 18: Anschlussadapter zum Anschluss der Zuleitung an die Druckgasquelle
- 19: komplementärer Anschlussadapter
- 20a: Packer
- 20b: Packer
- 22: Spannelement
- 24: UV-Strahlungsquelle

- A: lichter Abstand des Expansionskörpers vom Rand des Auskleidungsschlauchs
- DN: Durchmesser des Auskleidungsschlauchs
- D: Durchmesser des Expansionskörpers
- L: Länge des Expansionskörpers

## Patentansprüche

1. Vorrichtung (1) zum radialen Aufweiten der Endabschnitte (2a, 2b) eines mit einem härtbaren Reaktionsharz getränkten Auskleidungsschlauchs (2) aus Fasermaterial zum Auskleiden von defekten Rohrleitungen (4),
**gekennzeichnet, durch**
einen expandierbaren geschlossenen Expansionskörper (10) aus einem flexiblen luftunduchlässigen Werkstoff, welcher dazu eingerichtet ist, in einen Endabschnitt (2a, 2b) des Auskleidungsschlauchs (2) eingebracht zu werden, sowie eine mit dem Innenraum (12) des Expansionskörpers (10) strömungsmäßig verbundene Zuleitung (14), welche zur Beaufschlagung des Innenraums (12) des Expansionskörpers (10) mit einem Druckgas (16a) mit einer Druckgasquelle (16) verbindbar ist.

2. Vorrichtung nach Anspruch 1,
**dadurch gekennzeichnet, dass**
der Expansionskörper (10) im expandierten Zustand eine zylindrische Form oder eine zigarrenförmige Form besitzt.

3. Vorrichtung nach Anspruch 1 oder 2,
**dadurch gekennzeichnet, dass**
der Expansionskörper (10) eine Länge (L) besitzt, die dem 1,5 bis 2-fachen des Durchmessers (D) des Expansionskörpers (10) entspricht.

4. Vorrichtung nach einem der vorhergehenden Ansprüche,
**dadurch gekennzeichnet, dass**
das der Expansionskörper (10) aus einer Kunststofffolie geformt ist.

5. Vorrichtung nach Anspruch 3,
**dadurch gekennzeichnet, dass**
die Kunststofffolie eine thermisch verschweißbare Kunststofffolie, insbesondere eine PE/PA Folie ist.

6. Vorrichtung nach Anspruch 4 oder 5,
**dadurch gekennzeichnet, dass**
die Kunststofffolie eine Stärke zwischen 80 und 250 Mikrometern, insbesondere zwischen 120 und 200 Mikrometern besitzt.

7. Vorrichtung nach einem der vorhergehenden Ansprüche,
**dadurch gekennzeichnet, dass**
der Expansionskörper (10) im nicht expandierten Zustand zu einem Wickel aufrollbar und durch Beaufschlagung mit Druckgas (16a) aus der Druckgasquelle (16) abwickelbar ist.

8. Auskleidungsschlauch (2) zur Auskleidung einer defekten Rohrleitung (4), welcher wenigstens einen umfänglich geschlossenen Innenfolienschlauch und eine diesen umgebende Lage aus Fasermaterial umfasst, welches mit einem härtbaren Reaktionsharz getränkt ist, wobei der Auskleidungsschlauch (2) einen ersten und zweiten Endabschnitt (2a, 2b) besitzt, welche auf einander gegenüberliegenden Seiten des Auskleidungsschlauchs (2) angeordnet sind, und der Auskleidungsschlauch (2) dazu eingerichtet ist, in die zu sanierende Rohrleitung (4) eingezogen und durch Einleiten von Druckgas (16a) in den Innenraum (2i) des Auskleidungsschlauchs (2) expandiert zu werden,
**dadurch gekennzeichnet, dass**
in den ersten und zweiten Endabschnitt (2a, 2b) jeweils eine Vorrichtung (1) nach einem der vorhergehenden Ansprüche mit einem entspannten Expansionskörper (10) eingelegt ist.

9. Auskleidungsschlauch nach Anspruch 8,
**dadurch gekennzeichnet, dass**
der Expansionskörper (10) in einem lichten Abstand (A) von 40 bis 80 cm, bevorzugt einem lichten Abstand (A) von 50 cm entfernt vom äußeren Ende eines jeden der beiden Endabschnitte (2a 2b) des Auskleidungsschlauchs (2) in dessen Innenraum (2i) eingelegt ist, und/oder dass der Expansionskörper 10 eine Länge (L) besitzt, die dem 1,5 bis 2-fachen des Durchmessers (D) des Expansionskörpers (10) entspricht, und/oder dass der Durchmesser (D) des Expansionskörpers (10) gleich oder größer, insbesondere 20% bis 50% größer als der Durchmesser (DN) des Auskleidungsschlauchs (2) ist.

10. Verfahren zum Einbringen eines Auskleidungsschlauchs (2) nach einem der Ansprüche 8 oder 9 in eine zu sanierende Rohrleitung (4),
**gekennzeichnet durch** die folgenden Verfahrensschritte:
- Einziehen des Auskleidungsschlauchs (2) im nicht expandierten Zustand in die zu sanierende Rohrleitung (4), wobei im ersten und zweiten Endabschnitt (2a, 2b) des Auskleidungsschlauchs(2) eine Vorrichtung (1) nach Anspruch 1 mit einem entspannten Expansionskörper (10) in einem lichten Abstand (A) vom jeweiligen Rand des Endabschnitts (2a, 2b) angeordnet ist,
- Beaufschlagen des Expansionskörpers (10) im ersten und zweiten Endabschnitt (2a, 2b) mit Druckgas (16a) zum radialen Aufweiten des Auskleidungsschlauchs (2) im Bereich des ersten und zweiten Endabschnitts (2a, 2b),
- Einsetzen eines Packers (20a, 20b) in den radial aufgeweiteten Innenraum (2i) des ersten und zweiten Endabschnitts (2a, 2b),
- Fixieren des ersten und zweiten Endabschnitts (2a, 2b) mittels eines um diesen im Bereich des Packers (20a, 20b) herum geführten Spannelements (22), und Entspannen und Entfernen der Expansionskörper
- Einleiten von Druckgas (16a) in den Innenraum (2i) des durch die Packer (20a, 20b) im Bereich des ersten und zweiten Endabschnitts (2a, 2b) verschlossenen Auskleidungsschlauchs (2) zum Expanieren des Auskleidungsschlauchs, und
- Einführen einer Strahlungsquelle (24) oder Einleiten von Heißwasser oder Heißgas zum Aushärten des Reaktionsharzes in den Innenraum (2i) des expandierten Auskleidungsschlauchs (2).
